# FASCICULE DE BREVET EUROPEEN

(11) **EP 2 077 515 B1**
(45) Date de publication et mention de la délivrance du brevet: **07.03.2018**
(21) Numéro de dépôt: 08291229.6
(22) Date de dépôt: 23.12.2008
(51) Int. Cl.: G06F 21/34, G06F 21/57, G06F 21/72

(54) **Dispositif, systèmes et procédé de démarrage sécurisé d'une installation informatique**
Vorrichtung, Systeme und Verfahren zum gesicherten Starten einer IT-Anlage
Device, systems and method for securely starting up a computer system

(30) Priorité: 07.01.2008 FR 0800076
(43) Date de publication de la demande: 08.07.2009
(73) Titulaire: Bull S.A.S., 78340 Les Clayes-sous-Bois (FR)
(72) Inventeur: Filee, Alain, 78700 Conflans Sainte-Honorine (FR); Martin, René, 91440 Bures sur Yvette (FR)
(74) Mandataire: Bonnet, Michel

(56) Documents cités:
- EP-A- 1 850 259
- US-A- 5 892 902
- US-A1- 2005 055 566

## Description

La présente invention concerne un dispositif de démarrage sécurisé d'une installation informatique. Elle concerne également un procédé et des systèmes correspondants.

Une installation informatique comprend généralement au moins un disque dur interne et une carte mère munie d'un microprocesseur et d'une mémoire vive de type RAM (de l'anglais « Read Access Memory »), pour l'exécution de programmes d'ordinateurs stockés notamment dans le disque dur interne. En premier lieu, le microprocesseur est adapté pour exécuter un programme de démarrage de l'installation informatique, incluant notamment des instructions d'exécution d'un système d'exploitation. Le disque dur interne de l'installation stocke un tel programme de démarrage associé à un système d'exploitation prédéterminé. Un programme de démarrage peut aussi être disponible sur un support de données externe, tel qu'un CD-ROM fourni avec l'installation informatique lorsque celle-ci est munie d'un lecteur correspondant, ou un autre type de support pouvant être connecté à l'installation informatique via un port de type USB par exemple.

Une stratégie de démarrage appliquée par le microprocesseur peut en outre être définie dans un système élémentaire d'entrée/sortie, appelé communément BIOS (de l'anglais « Basic Input Output System ») et contenu dans une mémoire morte de type ROM (de l'anglais « Read Only Memory ») de la carte mère. Le BIOS peut ainsi prévoir une hiérarchie au démarrage, donnant priorité au programme de démarrage du CD-ROM, si celui-ci est correctement positionné dans le lecteur de l'installation informatique et si son programme de démarrage est prêt à être exécuté, puis au programme de démarrage d'un autre support, si celui-ci est connecté à un port USB de l'installation informatique et si son programme de démarrage est prêt à être exécuté, puis par défaut au programme de démarrage du disque dur interne.

Dans tous les cas, le démarrage de l'installation informatique peut être avantageusement sécurisé.

EP1850259A2 décrit un dispositif de protection des données et codes exécutables d'un système informatique quelconque fixe ou portable et ayant un support mémoire à protéger. Le dispositif de sécurité et de protection est placé physiquement entre le système informatique et le support mémoire à protéger contenant les données et codes exécutables, pour permettre au système informatique l'accès aux données et codes à protéger après mise en oeuvre des fonctions de protections indépendantes du code machine exécuté par le système informatique et ne nécessitant pour la mise en oeuvre de ces fonctions aucune interaction avec le processeur du système.

Un autre procédé de démarrage sécurisé d'une installation informatique est ainsi décrit dans la demande de brevet publiée sous le numéro US 2006/0236122. Ce procédé consiste, dans son principe général, à vérifier l'intégrité d'un programme avant de l'exécuter, à l'aide d'un algorithme de cryptographie. L'algorithme de cryptographie est exécuté par le microprocesseur de la carte mère à l'aide d'un système de clés stocké localement de façon sécurisée, par exemple sur le disque dur interne. En particulier, ce procédé peut être mis en oeuvre pour vérifier l'intégrité du BIOS ou d'une partie du BIOS, d'un programme de démarrage ou d'une partie d'un tel programme, telle que par exemple le noyau du système d'exploitation exécuté au démarrage.

Un avantage de ce procédé est de permettre au microprocesseur de la carte mère de l'installation informatique de sécuriser l'exécution de programmes qui parfois ne sont pas certifiés au préalable par une autorité de certification reconnue. En revanche, il impose à l'installation informatique une contrainte consistant à stocker, en local et de façon sécurisée, un système de clés de cryptographie, voire plusieurs systèmes de clés si nécessaire, c'est-à-dire notamment si des sécurités distinctes doivent être prévues pour des programmes distincts.

La question se pose en particulier lorsqu'une même installation informatique est susceptible d'être utilisée par plusieurs personnes. Chaque utilisateur peut vouloir définir lui-même son propre environnement de travail associé à des applications spécifiques. Une autre solution connue, et pouvant être ajoutée à la précédente, est de définir des données d'authentification propres à chaque utilisateur, de les stocker en local de façon sécurisée, et de procéder à une vérification, réalisée par le microprocesseur à l'aide des données d'authentification stockées, au cours d'une étape du démarrage, par exemple juste après le lancement du système d'exploitation. Là encore, de façon contraignante, l'authentification est gérée par l'installation informatique et de plus, par souci de simplicité, les utilisateurs doivent en général utiliser le même système d'exploitation bien qu'ils puissent ensuite personnaliser leur environnement de travail.

Il peut ainsi être souhaité de prévoir un dispositif et/ou un procédé de démarrage sécurisé d'une installation informatique qui permette de s'affranchir de ces contraintes.

L'invention a donc pour objet un dispositif de démarrage sécurisé d'une installation informatique, comportant au moins:
- une première interface de connexion à l'installation informatique,
- une seconde interface de connexion à un support de données externe, ce dernier étant distinct de l'installation informatique et comportant des données et codes exécutables d'un programme de démarrage de l'installation informatique,
- des moyens de sécurisation d'une utilisation des données et codes exécutables, et
- des moyens de transmission des données et codes exécutables du programme de démarrage, depuis le support de données externe via la seconde interface de connexion vers le système informatique via la première interface de connexion, après exécution des moyens de sécurisation, pour le démarrage de l'installation informatique à l'aide des données et codes exécutables transmis.

Ainsi, il suffit que le BIOS de l'installation informatique prévoie, dans sa stratégie de démarrage, de vérifier la connexion du dispositif de démarrage à l'installation informatique pour que ce dernier prenne lui-même en charge la sécurisation d'une utilisation des données et codes exécutables permettant le transfert de données et codes exécutables d'un programme de démarrage spécifique devant être ensuite exécuté par le microprocesseur de la carte mère de l'installation informatique. Les moyens de sécurisation comportent des moyens de vérification et de validation de droits d'accès, pour l'exécution d'un procédé d'authentification d'un utilisateur du support de données externe.

Dans ce cas, de façon optionnelle, un dispositif de démarrage sécurisé d'une installation informatique selon l'invention comporte des moyens de stockage sécurisé de données de droits d'accès pour la vérification et la validation des droits d'accès à l'aide des données de droits d'accès stockées.

De façon optionnelle, les moyens de sécurisation comportent des moyens cryptographiques de sécurisation des données et codes exécutables du programme de démarrage.

De façon optionnelle, les moyens cryptographiques de sécurisation comportent des moyens d'exécution d'un procédé de vérification de l'intégrité des données et codes exécutables du programme de démarrage.

De façon optionnelle, les moyens cryptographiques de sécurisation comportent des moyens d'exécution d'un procédé de déchiffrement des données et codes exécutables du programme de démarrage.

De façon optionnelle, la première interface de connexion est un point d'accès à un bus de transmission de données numériques de l'installation informatique.

De façon optionnelle, la seconde interface de connexion est un point d'accès à un bus de transmission de données numériques du support de données externe.

L'invention a également pour objet un système informatique à démarrage sécurisé comportant une installation informatique, un support de données externe, distinct de l'installation informatique et comportant des données et codes exécutables d'un programme de démarrage de l'installation informatique, et un dispositif de démarrage sécurisé selon l'invention, le dispositif de démarrage sécurisé étant :
- connecté à l'installation informatique via la première interface de connexion et au support de données externe via la seconde interface de connexion, et
- disposé en coupure entre l'installation informatique et le support de données externe.

L'invention a également pour objet un procédé de démarrage sécurisé d'une installation informatique comportant une étape de sécurisation d'une utilisation de données et codes exécutables, caractérisé en ce qu'il comporte comporte au moins les étapes suivantes :
- connexion d'un dispositif de démarrage sécurisé à l'installation informatique,
- connexion d'un support de données externe au dispositif de démarrage sécurisé, ce support de données externe étant distinct de l'installation informatique et comportant des données et codes exécutables d'un programme de démarrage de l'installation informatique,
- exécution par le dispositif de démarrage sécurisé de l'étape de sécurisation, et
- après l'exécution de l'étape de sécurisation par le dispositif de démarrage sécurisé, transmission, par le dispositif de démarrage sécurisé, des données et codes exécutables du programme de démarrage, depuis le support de données externe vers l'installation informatique, pour le démarrage de l'installation informatique à l'aide des données et codes exécutables transmis.
Le procédé selon l'invention comporte une étape de suspension du démarrage de l'installation informatique, activée par l'émission, par le dispositif de démarrage sécurisé, d'une instruction de mise en attente adressée à l'installation informatique, tant que l'étape de sécurisation n'a pas été exécutée par le dispositif de démarrage sécurisé. L'étape de sécurisation comporte une étape de vérification et validation de droits d'accès par exécution d'un procédé d'authentification d'un utilisateur du support de données externe.

De façon optionnelle, l'étape de sécurisation comporte une étape cryptographique de sécurisation des données et codes exécutables du programme de démarrage.

De façon optionnelle, l'étape cryptographique de sécurisation comporte l'exécution d'un procédé de vérification de l'intégrité des données et codes exécutables du programme de démarrage.

De façon optionnelle, l'étape cryptographique de sécurisation comporte l'exécution d'un procédé de déchiffrement des données et codes exécutables du programme de démarrage.

L'invention sera mieux comprise à l'aide de la description qui va suivre, donnée uniquement à titre d'exemple et faite en se référant aux dessins annexés dans lesquels :
- les figures 1, 2 et 3 représentent respectivement les structures générales de premier, deuxième et troisième modes de réalisation d'un système informatique selon l'invention, pour le démarrage sécurisé d'une installation informatique, et
- la figure 4 illustre les étapes successives d'un mode de réalisation d'un procédé de démarrage sécurisé d'une installation informatique selon l'invention.

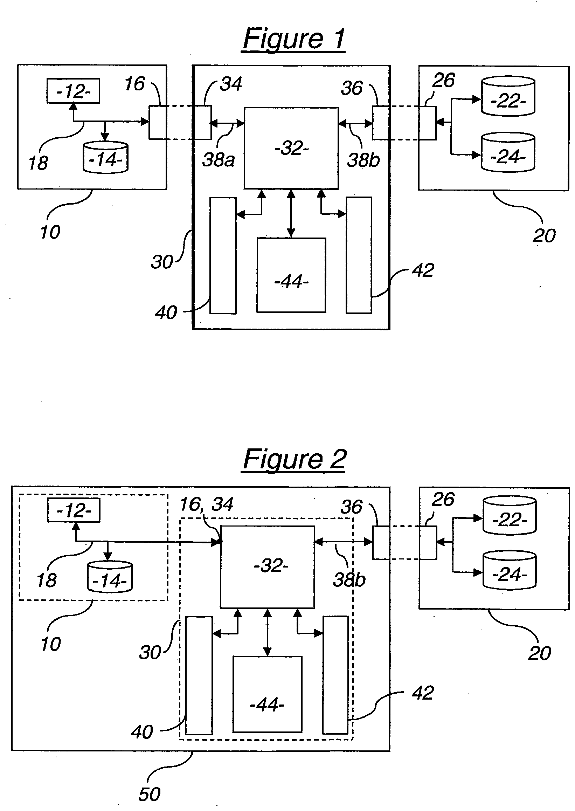

Sur la figure 1, une installation informatique est représentée par la référence générale 10. Cette installation comporte notamment une carte mère 12, un disque dur interne 14 et une interface 16 de connexion à un dispositif externe. Ces trois éléments 12, 14 et 16 sont reliés entre eux à l'aide d'un bus 18 de transmission de données classique. De façon classique également, la carte mère 12 comporte un microprocesseur, une mémoire ROM pour le stockage du BIOS de l'installation informatique 10 et une mémoire RAM pour, en combinaison avec le microprocesseur, l'exécution de programmes, parmi lesquels notamment un programme de démarrage de l'installation informatique 10. Un tel programme de démarrage est par exemple par défaut stocké dans le disque dur interne 14 de l'installation informatique.

Cette installation est appropriée pour la mise en oeuvre de l'invention, mais d'autres configurations possibles d'installations informatiques conviennent aussi. En effet, l'invention s'applique, de façon non limitative, à des installations informatiques telles que des ordinateurs de type PC fixes ou portables, des serveurs, des installations multiprocesseurs, des réseaux locaux d'ordinateurs, etc.

Un support de données externe 20, distinct de l'installation informatique 10 et non directement relié à celle-ci, est également représenté sur la figure 1. Il comporte des données 22 et codes exécutables 24 d'un programme de démarrage de l'installation informatique 10. Chacun de ces données 22 et codes exécutables 24 peut être stocké sous forme chiffrée et associé à une signature, conformément à des procédés de cryptographie classiques. Le support de données externe 20 comporte en outre une interface 26 de connexion à un dispositif externe. Le support de données est par exemple une clé de type USB ou bien un disque dur externe à connexion USB, auquel cas l'interface de connexion 26 est un port ou une prise USB.

Enfin, un dispositif 30 de démarrage sécurisé de l'installation informatique 10 est également représenté sur la figure 1. Ce dispositif 30 est par exemple réalisé sous la forme d'un système sur puce électronique, incluant des fonctionnalités de sécurisation d'une utilisation des données et codes exécutables, ainsi que des fonctionnalités de transmission de données. Les fonctionnalités de sécurisation d'une utilisation des données et codes exécutables peuvent inclure des fonctionnalités de vérification et de validation de droits d'accès d'un utilisateur ainsi que des fonctionnalités cryptographiques de sécurisation des données et codes eux-mêmes.

Pour cela, il comporte un microprocesseur 32, deux interfaces 34 et 36 reliées au microprocesseur 32 par deux bus 38a et 38b de transmission de données, des moyens 40 de stockage d'applications exécutables d'émission et de réception de données, des moyens 42 de stockage d'applications exécutables de cryptographie et/ou d'authentification pour la sécurisation des données et codes exécutables et pour la vérification et la validation des droits d'accès, et des moyens 44 de stockage sécurisé de données secrètes de cryptographie et/ou d'authentification. Le microprocesseur 32, doté de son propre système d'exploitation sécurisé, est configuré pour, en association avec les moyens 40, 42 et 44 :
- exécuter une étape de sécurisation d'une utilisation des données et codes exécutables comportant au moins l'une des sous étapes suivantes :
   - vérifier et valider des droits d'accès par authentification d'un utilisateur, à l'aide des moyens 42 et 44,
   - déchiffrer des données et codes exécutables, si nécessaire, à l'aide des moyens 42 et 44,
   - vérifier des signatures, si nécessaire, à l'aide des moyens 42 et 44,
- piloter des échanges de données entre une première interface 34 de connexion à l'installation informatique 10 et une seconde interface 36 de connexion au support de données externe 20, à l'aide des moyens 40, de manière à transmettre les données 22 et codes exécutables 24 du programme de démarrage stockés dans le support de données externe 20, depuis le support de données externe 20 via la seconde interface de connexion 36 vers l'installation informatique 10 via la première interface 34 de connexion, après exécution de l'étape de sécurisation, par vérification et validation de droits d'accès, d'une part, et sécurisation cryptographique des données 22 et codes exécutables 24, d'autre part, pour le démarrage de l'installation informatique 10 à l'aide des données 22 et codes exécutables 24 transmis, et
- suspendre le démarrage de l'installation informatique 10 tant que l'étape de sécurisation n'a pas été exécutée.

On notera que le microprocesseur 32, associé aux moyens 40, 42 et 44, permet au dispositif de démarrage sécurisé 30 de fonctionner de manière autonome pour réaliser ses fonctionnalités de sécurisation et de transmission de données et codes exécutables du programme de démarrage. Il est notamment complètement indépendant des ressources de l'installation informatique 10. La carte mère 12 n'est en effet sollicitée que pour démarrer l'installation informatique à l'aide des données et codes exécutables du programme de démarrage, après que ceux-ci ont été transmis et éventuellement déchiffrés par le dispositif de démarrage sécurisé 30.

Dans le mode de réalisation de la figure 1, l'installation informatique 10, le dispositif de démarrage sécurisé 30 et le support de données externe 20 forment trois composants distincts pouvant être connectés ou déconnectés simplement, via les interfaces 16, 34, 36 et 26. Comme indiqué précédemment, les interfaces 36 et 26 sont par exemple des ports et/ou prises de type USB compatibles. Il peut en être de même pour les interfaces 16 et 34. Après connexion de ces trois dispositifs 10, 20 et 30, le dispositif de démarrage sécurisé 30 s'interpose entre l'installation informatique 10 et le support de données externe 20, et les relie en coupure, pour réaliser le démarrage de l'installation informatique 10. Dans ce mode de réalisation, le dispositif de démarrage sécurisé 30 peut prendre la forme d'un bloc VHDL d'un composant de type ASIC (de l'anglais « Application Specific Integrated Circuit ») ou d'un réseau de portes logiques programmable de type FPGA (de l'anglais « Field Programmable Gâte Array ») indépendant.

Dans un autre mode de réalisation représenté sur la figure 2, le dispositif de démarrage sécurisé 30 est intégré, avec l'installation informatique 10, dans un système informatique à démarrage sécurisé 50. Dans ce mode de réalisation, le dispositif de démarrage sécurisé 30 peut prendre la forme d'un bloc VHDL d'un composant de type ASIC ou d'un réseau de portes logiques programmable de type FPGA, disposé en coupure entre la seconde interface 36 de connexion au support de données externe 20 et le bus 18 de transmission de données de l'installation informatique 10. La première interface 34 de connexion du dispositif de démarrage sécurisé 30 à l'installation informatique prend alors la forme d'un point d'accès au bus 18 du microprocesseur 32 du dispositif de démarrage sécurisé 30.

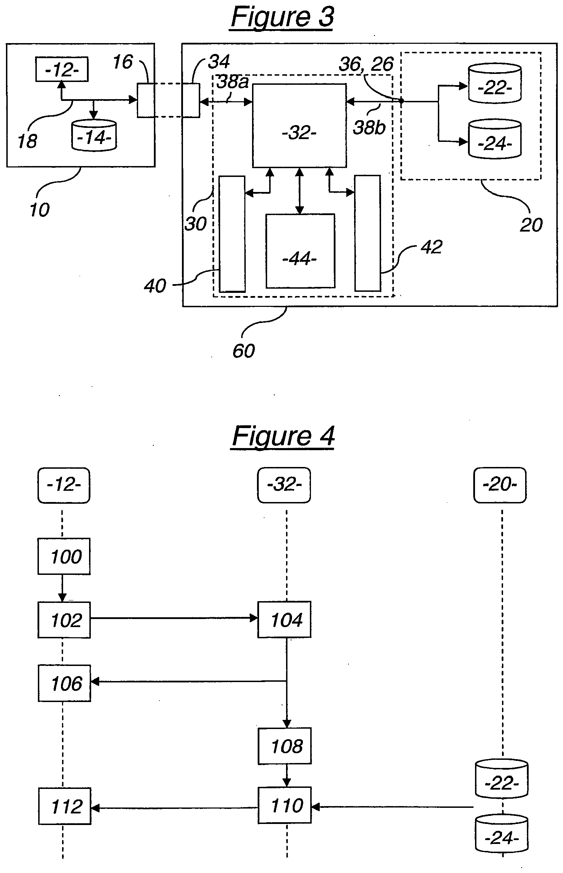

Enfin, dans un autre mode de réalisation représenté sur la figure 3, le dispositif de démarrage sécurisé 30 est intégré, avec le support de données externe 20, dans un système informatique de démarrage sécurisé 60. Dans ce mode de réalisation, le support de données externe 20 peut être directement connecté au bus 38b de transmission de données du dispositif de démarrage sécurisé 30, ce dernier pouvant prendre la forme d'un bloc VHDL d'un composant de type ASIC ou d'un réseau de portes logiques programmable de type FPGA, disposé en coupure entre le support de données externe 20 et la première interface 34 de connexion du dispositif de démarrage sécurisé 30 à l'installation informatique. Dans ce cas, les interfaces 16 et 34 peuvent prendre la forme de port et/ou prise USB en correspondance. La seconde interface 36 de connexion du dispositif de démarrage sécurisé 30 au support de données externe 20 prend la forme d'un point d'accès du support de données externe au bus 38b.

Les fonctionnalités de sécurisation du dispositif de démarrage sécurisé 30 comportent l'une ou plusieurs des fonctions classiques de la cryptologie, notamment, la confidentialité, l'intégrité et l'authentification.

La confidentialité concerne l'échange entre entités de messages chiffrés qui, sans clé de déchiffrement, sont inintelligibles. Cette confidentialité est assurée par l'application d'algorithmes à schéma de chiffrement symétrique (i.e. à clé secrète) ou asymétrique (i.e. à paire de clés publique et privée). Pour assurer cette fonctionnalité, le dispositif de démarrage sécurisé 30 doit stocker la ou les clé(s) nécessairé(s) au chiffrement ou au déchiffrement dans les moyens de stockage sécurisé 44 et le ou les algorithme(s) de chiffrement correspondants dans les moyens 42 de stockage d'applications. Cette fonctionnalité s'applique aux données 22 et codes exécutables 24, éventuellement à l'aide d'algorithmes et clés différents.

L'intégrité concerne la vérification qu'un message reçu n'a pas été modifié par une tierce personne ou un système malveillant. Cette intégrité est gérée à l'aide de fonctions de hachage à clé secrète, dites fonctions HMAC (de l'anglais « keyed-Hash Message Authentication Code »), ou à l'aide de schémas de signature à clé publique. De même, pour assurer cette fonctionnalité, le dispositif de démarrage sécurisé 30 doit stocker la ou les clé(s) nécessaire(s) à la vérification d'une signature dans les moyens de stockage sécurisé 44 et le ou les algorithme(s) de génération et/ou vérification de signatures correspondants dans les moyens 42 de stockage d'applications. Cette fonctionnalité s'applique aux données 22 et codes exécutables 24, éventuellement à l'aide d'algorithmes et clés différents.

L'authentification concerne la reconnaissance d'une personne à l'aide d'un secret qu'elle seule possède. Le secret peut être un code ou mot de passe, mais peut aussi comporter des données biométriques. Plusieurs protocoles d'authentification existent : certains consistent simplement à comparer un secret saisi à un modèle stocké de façon sécurisée, d'autres combinent authentification et confidentialité ou intégrité, d'autres encore sont à divulgation nulle de connaissance. Pour assurer cette fonctionnalité, le dispositif de démarrage sécurisé 30 doit éventuellement stocker un modèle dans les moyens de stockage sécurisé 44 et le protocole d'authentification utilisé dans les moyens 42 de stockage d'applications. Il doit aussi comporter des moyens de saisie du secret, comme par exemple un clavier de saisie alphanumérique ou un capteur biométrique (non représenté sur les figures 1 à 3). Cette fonctionnalité s'adresse par exemple au propriétaire du support de données externe 20, en tant qu'utilisateur souhaitant réaliser le démarrage de l'installation informatique 10 à l'aide de son propre programme de démarrage et des données 22 et codes exécutables 24 associés.

Comme illustré sur les figures 1, 2 et 3, les moyens 42 de stockage d'applications, d'une part, et les moyens de stockage sécurisé 44, d'autre part, sont présentés comme une architecture possible de mise en oeuvre des fonctionnalités de sécurisation d'une utilisation des données 22 et codes exécutables 24, mais d'autres architectures sont également possibles : notamment la fourniture de davantage de média de stockages indépendants et de types différents, adaptés chacun à une ou plusieurs fonction(s) parmi les fonctions de cryptologie précitées, éventuellement partitionnés.

En outre, puisque les fonctions précitées mettent en oeuvre des algorithmes à base de clés de cryptographie, des algorithmes de génération de nombres aléatoires, de génération de clés de cryptographie, de conservation de l'intégrité des clés générées et autres peuvent être prévus dans le dispositif de démarrage sécurisé 30 et exécutés par le microprocesseur 32 et les moyens de stockage associés.

Enfin, les interfaces 16, 26, 34 et 36 ont été décrites à titre d'exemple comme pouvant être de type USB ou à accès direct à un bus de transmission de données. D'une façon plus générale, ces interfaces peuvent être de type parallèle (bus processeur, PCMCIA, ...), série (USB, PCI-X, ...) ou sans fil (Wireless USB, ...).

La mise en oeuvre, par l'un des systèmes présentés précédemment, d'un mode de réalisation d'un procédé de démarrage de l'installation informatique 10 selon l'invention, va maintenant être détaillée, en référence à la figure 4.

Lors d'une première étape 100, l'installation informatique 10 est mise sous tension, ce qui provoque l'exécution du BIOS de la carte mère 12. De façon classique, le BIOS commence par tester, déclarer et configurer les différents composants et périphériques de l'installation informatique 10, puis recherche un programme de démarrage et un système d'exploitation associé avant de le lancer, conformément à une stratégie de démarrage prédéfinie.

Lors d'une étape suivante 102, le BIOS de la carte mère 12 détecte la connexion du dispositif de démarrage sécurisé 30 à l'interface 16 de l'installation informatique 10. Lors de cette étape, il sollicite la transmission de données et codes exécutables d'un programme de démarrage auprès du dispositif de démarrage sécurisé 30.

Ensuite, lors d'une étape 104, le microprocesseur 32 du dispositif de démarrage sécurisé 30, reçoit cette sollicitation et génère une instruction de mise en attente du démarrage de l'installation informatique 10 tant qu'il n'aura pas sécurisé l'utilisation des données 22 et codes exécutables 24 du support de données externe 20 connecté via la seconde interface 36.

Cette étape 104 est suive d'une étape 106 lors de laquelle le microprocesseur de la carte mère 12 suspend le démarrage de l'installation informatique 10.

L'étape 104 est également suivie d'une étape 108 d'authentification, constituant une première étape de sécurisation de l'utilisation des données 22 et codes exécutables 24, de manière à s'assurer que l'utilisateur souhaitant démarrer l'installation informatique 10 possède effectivement des droits d'accès aux données 22 et codes exécutables 24 stockés dans le support de données externe 20. Cette étape requiert la saisie d'un secret (code, mot de passe ou données biométriques) de la part de l'utilisateur, via une interface dédiée du dispositif de démarrage sécurisé 30.

Suite à l'étape 108, on passe à une étape 110, constituant une seconde étape de sécurisation de l'utilisation des données 22 et codes exécutables 24. Lors de cette étape, les données 22 et codes exécutables 24 stockés dans le support de données externe 20 sont traités par le microprocesseur 32, à l'aide des fonctions et données de cryptographie stockées dans les moyens de stockage 42 et 44, pour être déchiffrés et/ou validés en terme d'intégrité, avant d'être transmis au processeur de la carte mère 12 de l'installation informatique 10.

La transmission, par le dispositif de démarrage, des données 22 et codes exécutables 24 déchiffrés à l'installation informatique 10 n'est réalisée que si les étapes 108 et 110 s'exécutent avec succès. Une fonction du dispositif de démarrage sécurisé 30 est en effet de s'interposer entre l'installation informatique 10 et le support de données externe 20 pour réaliser la sécurisation de l'utilisation des données 22 et codes exécutables 24 et pour ne transmettre ces derniers (i.e. les données 22 et codes exécutables 24) à l'installation informatique 10 qu'à condition que la sécurisation ait été réalisée par le dispositif de démarrage sécurisé 30, par vérification et validation des droits d'accès de l'utilisateur, d'une part, et par sécurisation cryptographique des données 22 et codes exécutables 24 eux-mêmes, d'autre part.

Lorsque les droits d'accès sont validés, lorsque l'intégrité des données et codes exécutables est vérifiée et qu'ils sont déchiffrés, on passe à une dernière étape 112 de transmission des données 22 et codes exécutables 24 déchiffrés à l'installation informatique 10, et de poursuite du démarrage de l'installation informatique 10 sur la base des données 22 et codes exécutables 24 transmis. Ce démarrage est réalisé par le microprocesseur de la carte mère 12.

Le fonctionnement du dispositif de démarrage 30 vient d'être décrit en utilisation courante, pour le démarrage de l'installation informatique 10 par un utilisateur sur la base de données et codes exécutables propres à cet utilisateur.

Il peut aussi être prévu un fonctionnement en mode « administrateur » du dispositif de démarrage 30, en alternative au mode « utilisateur » précédemment décrit. Un administrateur est un utilisateur particulier possédant des droits supplémentaires et qui doit donc être identifié à l'aide de données spécifiques.

Dans le mode administrateur, il est par exemple possible de définir la taille des données d'authentification, les mécanismes cryptographiques utilisés, le nombre de partitions et attributs des moyens de stockage, les diverses autorisations d'un utilisateur, le protocole d'authentification utilisé, le droit pour un utilisateur de modifier la configuration des partitions, etc.

Il apparaît clairement que le dispositif ou procédé de démarrage précédemment décrit permet un démarrage personnalisé d'une installation informatique 10, après une sécurisation d'une utilisation des données et codes exécutables réalisée indépendamment des ressources de l'installation informatique. Il suffit que le BIOS de cette installation informatique prévoie prioritairement un démarrage sur la base de données et codes exécutables stockés dans un dispositif externe, ce qui est généralement le cas de tout BIOS correctement paramétré. Le dispositif de démarrage sécurisé se charge ensuite des étapes de vérification et validation des droits d'accès, puis de l'étape de vérification de l'intégrité et de transmission des données et codes exécutables déchiffrés. Ainsi, un utilisateur peut emporter avec lui un support de données qui lui est propre et démarrer toute installation informatique avec l'ensemble de ses données, tout en ayant l'assurance d'une sécurité d'intégrité et de confidentialité dans l'utilisation de ces données et codes exécutables.

On notera enfin que l'invention n'est pas limitée aux modes de réalisations décrits précédemment.

En effet, diverses variantes peuvent être apportées dans la structure du système informatique mis en oeuvre, que ce soit au niveau de l'installation informatique, du dispositif de démarrage sécurisé ou du support de données externe. Diverses variantes peuvent être apportées également dans le procédé mis en oeuvre, notamment dans le choix et la séquence des algorithmes de cryptologie utilisés.

## Revendications

1. Dispositif (30) de démarrage sécurisé d'une installation informatique (10), comportant :
- une première interface (34) de connexion à l'installation informatique (10),
- une seconde interface (36) de connexion à un support de données externe (20), ce dernier étant distinct de l'installation informatique (10) et comportant des données (22) et codes exécutables (24),
- des moyens (32, 42, 44) de sécurisation d'une utilisation des données (22) et codes exécutables (24), ces moyens comportant des moyens de vérification et de validation de droits d'accès, pour l'exécution d'un procédé d'authentification d'un utilisateur du support de données externe (20) indépendamment de toute ressource de l'installation informatique (10),
**caractérisé en ce que** les données (22) et codes exécutables (24) sont celles et ceux d'un programme de démarrage de l'installation informatique (10) et **en ce que** le dispositif (30) comporte en outre :
- des moyens (32) de suspension du démarrage de l'installation informatique (10) par émission d'une instruction de mise en attente adressée à l'installation informatique (10) tant que l'utilisation des données (22) et codes exécutables (24) n'est pas sécurisée, cette sécurisation étant réalisée par une exécution, par les moyens (32, 42, 44) de sécurisation, du procédé d'authentification, et
- des moyens (32, 40) de transmission des données (22) et codes exécutables (24) du programme de démarrage, depuis le support de données externe (20) via la seconde interface de connexion (36) vers l'installation informatique (10) via la première interface de connexion (34), après vérification et validation des droits d'accès, pour le démarrage de l'installation informatique (10) à l'aide des données (22) et codes exécutables (24) transmis.

2. Dispositif (30) de démarrage sécurisé d'une installation informatique (10) selon la revendication 1, comportant des moyens (44) de stockage sécurisé de données de droits d'accès pour la vérification et la validation des droits d'accès à l'aide des données de droits d'accès stockées.

3. Dispositif (30) de démarrage sécurisé d'une installation informatique (10) selon la revendication 1 ou 2, dans lequel les moyens de sécurisation (32, 42, 44) comportent des moyens cryptographiques de sécurisation des données (22) et codes exécutables (24) du programme de démarrage.

4. Dispositif (30) de démarrage sécurisé d'une installation informatique (10) selon la revendication 3, dans lequel les moyens cryptographiques de sécurisation comportent des moyens (32) d'exécution d'un procédé de vérification de l'intégrité des données (22) et codes exécutables (24) du programme de démarrage.

5. Dispositif (30) de démarrage sécurisé d'une installation informatique (10) selon la revendication 3 ou 4, dans lequel les moyens cryptographiques de sécurisation comportent des moyens (32) d'exécution d'un procédé de déchiffrement des données (22) et codes exécutables (24) du programme de démarrage.

6. Système informatique (50) à démarrage sécurisé comportant un dispositif de démarrage sécurisé (30) selon l'une quelconque des revendications 1 à 5 et une installation informatique (10) connectée au dispositif de démarrage sécurisé via la première interface de connexion (34).

7. Système informatique (50) à démarrage sécurisé selon la revendication 6, dans lequel la première interface de connexion (34) est un point d'accès à un bus (18) de transmission de données numériques de l'installation informatique (10).

8. Système informatique (60) de démarrage sécurisé d'une installation informatique (10), comportant un dispositif de démarrage sécurisé (30) selon l'une quelconque des revendications 1 à 5 et un support de données externe (20), distinct de l'installation informatique (10) et comportant des données (22) et codes exécutables (24) d'un programme de démarrage de l'installation informatique, connecté au dispositif de démarrage sécurisé via la seconde interface de connexion (36).

9. Système informatique (60) de démarrage sécurisé d'une installation informatique selon la revendication 8, dans lequel la seconde interface de connexion (36) est un point d'accès à un bus de transmission de données numériques du support de données externe (20).

10. Système informatique à démarrage sécurisé comportant une installation informatique (10), un support de données externe (20), distinct de l'installation informatique et comportant des données (22) et codes exécutables (24) d'un programme de démarrage de l'installation informatique, et un dispositif de démarrage sécurisé (30) selon l'une quelconque des revendications 1 à 5, le dispositif de démarrage sécurisé (30) étant :
- connecté à l'installation informatique (10) via la première interface de connexion (34) et au support de données externe (20) via la seconde interface de connexion (36), et
- disposé en coupure entre l'installation informatique (10) et le support de données externe (20).

11. Procédé de démarrage sécurisé d'une installation informatique (10) comportant les étapes suivantes :
- connexion (102) d'un dispositif de démarrage sécurisé (30) à l'installation informatique (10),
- connexion d'un support de données externe (20) au dispositif de démarrage sécurisé (30), ce support de données externe étant distinct de l'installation informatique et comportant des données (22) et codes exécutables (24) d'un programme de démarrage de l'installation informatique,
- exécution (108, 110) par le dispositif de démarrage sécurisé (30) d'une étape de sécurisation d'une utilisation desdites données et desdits codes exécutables (24), cette étape de sécurisation comprenant une vérification et une validation de droits d'accès par exécution d'un procédé d'authentification d'un utilisateur du support de données externe (20) indépendamment de toute ressource de l'installation informatique (10),
- suspension (106) du démarrage de l'installation informatique (10) par émission (104), par le dispositif de démarrage sécurisé (30), d'une instruction de mise en attente adressée à l'installation informatique (10) tant que l'étape (108, 110) de sécurisation n'a pas été exécutée, et
- après l'exécution de l'étape de sécurisation par le dispositif de démarrage sécurisé (30) incluant la vérification et la validation des droits d'accès par authentification, transmission, par le dispositif de démarrage sécurisé (30), des données (22) et codes exécutables (24) du programme de démarrage, depuis le support de données externe (20) vers l'installation informatique (10), pour le démarrage (112) de l'installation informatique à l'aide des données et codes exécutables transmis.

12. Procédé de démarrage sécurisé d'une installation informatique (10) selon la revendication 11, dans lequel l'étape (108, 110) de sécurisation comporte une étape cryptographique de sécurisation des données (22) et codes exécutables (24) du programme de démarrage.

13. Procédé de démarrage sécurisé d'une installation informatique (10) selon la revendication 12, dans lequel l'étape cryptographique de sécurisation comporte l'exécution d'un procédé de vérification de l'intégrité des données (22) et codes exécutables (24) du programme de démarrage.

14. Procédé de démarrage sécurisé d'une installation informatique (10) selon la revendication 12 ou 13, dans lequel l'étape cryptographique de sécurisation comporte l'exécution d'un procédé de déchiffrement des données (22) et codes exécutables (24) du programme de démarrage.

## Patentansprüche

1. Vorrichtung (30) zum gesicherten Starten einer IT-Anlage (10), umfassend:
- eine erste Schnittstelle (34) zur Verbindung an die IT-Anlage (10),
- eine zweite Schnittstelle (36) zur Verbindung an einen externen Datenträger (20), wobei dieser Letztere verschieden von der IT-Anlage (10) ist und Daten (22) und ausführbare Codes (24) umfasst,
- Mittel (32, 42, 44) zur Sicherung einer Verwendung der Daten (22) und ausführbaren Codes (24), wobei diese Mittel Mittel zur Überprüfung und zur Validierung von Zugangsrechten umfassen, für die Durchführung eines Verfahrens zur Authentifizierung eines Benutzers des externen Datenträgers (20), unabhängig von jeder Ressource der IT-Anlage (10),
**dadurch gekennzeichnet, dass** die Daten (22) und ausführbaren Codes (24) diejenigen eines Programms zum Starten der IT-Anlage (10) sind, und dadurch, dass die Vorrichtung (30) außerdem Folgendes umfasst:
- Mittel (32) zum Unterbrechen des Startens der IT-Anlage (10) durch Aussenden einer Anweisung zum Stoppen, gerichtet an die IT-Anlage (10), solange die Verwendung der Daten (22) und ausführbaren Codes (24) nicht gesichert ist, wobei diese Sicherung durch eine Durchführung, durch die Mittel (32, 42, 44) zur Sicherung, des Verfahrens zur Authentifizierung erfolgt, und
- Mittel (32, 40) zur Übertragung der Daten (22) und ausführbaren Codes (24) des Programms zum Starten vom externen Datenträger (20) über die zweite Verbindungsschnittstelle (36) zur IT-Anlage (10) über die erste Verbindungsschnittstelle (34) nach der Überprüfung und Validierung der Zugangsrechte für das Starten der IT-Anlage (10) mit Hilfe der übertragenen Daten (22) und ausführbaren Codes (24).

2. Vorrichtung (30) zum gesicherten Starten einer IT-Anlage (10) nach Anspruch 1, umfassend Mittel (44) zum gesicherten Speichern von Daten von Zugangsrechten zur Überprüfung und Validierung der Zugangsrechte mit Hilfe der gespeicherten Daten von Zugangsrechten.

3. Vorrichtung (30) zum gesicherten Starten einer IT-Anlage (10) nach Anspruch 1 oder 2, wobei die Mittel zur Sicherung (32, 42, 44) kryptographische Mittel zur Sicherung der Daten (22) und ausführbaren Codes (24) des Programms zum Starten umfassen.

4. Vorrichtung (30) zum gesicherten Starten einer IT-Anlage (10) nach Anspruch 3, wobei die kryptographischen Mittel zur Sicherung Mittel (32) zur Durchführung eines Verfahrens zur Überprüfung der Integrität der Daten (22) und ausführbaren Codes (24) des Programms zum Starten umfassen.

5. Vorrichtung (30) zum gesicherten Starten einer IT-Anlage (10) nach Anspruch 3 oder 4, wobei die kryptographischen Mittel zur Sicherung Mittel (32) zur Durchführung eines Verfahrens zur Dechiffrierung der Daten (22) und ausführbaren Codes (24) des Programms zum Starten umfassen.

6. IT-System (50) mit gesicherten Starten, umfassend eine Vorrichtung zum gesicherten Starten (30) nach einem der Ansprüche 1 bis 5 und eine IT-Anlage (10), die mit der Vorrichtung zum gesicherten Starten über die erste Verbindungsschnittstelle (34) verbunden ist.

7. IT-System (50) mit gesicherten Starten nach Anspruch 6, wobei die erste Verbindungsschnittstelle (34) ein Zugangspunkt zu einem Bus (18) zur Übertragung von numerischen Daten der IT-Anlage (10) ist.

8. IT-System (60) zum gesicherten Starten einer IT-Anlage (10), umfassend eine Vorrichtung zum gesicherten Starten (30) nach einem der Ansprüche 1 bis 5 und einen externen Datenträger (20), der verschieden von der IT-Anlage (10) ist und Daten (22) und ausführbare Codes (24) eines Programms zum Starten der IT-Anlage umfasst, das mit der Vorrichtung zum gesicherten Starten über die zweite Verbindungsschnittstelle (36) verbunden ist.

9. IT-System (60) zum gesicherten Starten einer IT-Anlage nach Anspruch 8, wobei die zweite Verbindungsschnittstelle (36) ein Zugangspunkt zu einem Bus zur Übertragung von numerischen Daten des externen Datenträgers (20) ist.

10. IT-System mit gesicherten Starten, umfassend eine IT-Anlage (10), einen externen Datenträger (20), der verschieden von der IT-Anlage ist, und umfassend Daten (22) und ausführbare Codes (24) eines Programms zum Starten der IT-Anlage, und eine Vorrichtung zum gesicherten Starten (30) nach einem der Ansprüche 1 bis 5, wobei die Vorrichtung zum gesicherten Starten (30):
- an die IT-Anlage (10) über die erste Verbindungsschnittstelle (34) und den externen Datenträger (20) über die zweite Verbindungsschnittstelle (32) verbunden ist, und
- am Schnitt zwischen der IT-Anlage (10) und dem äußeren Datenträger (20) angeordnet ist.

11. Verfahren zum gesicherten Starten einer IT-Anlage (10), umfassend die folgenden Schritte:
- Verbinden (102) einer Vorrichtung zum gesicherten Starten (30) mit der IT-Anlage (10),
- Verbinden eines externen Datenträgers (20) mit der Vorrichtung zum gesicherten Starten (30), wobei dieser externe Datenträger (20) verschieden von der IT-Anlage ist und Daten (22) und ausführbare Codes (24) eines Programms zum Starten der IT-Anlage umfasst,
- Ausführen (108, 110), durch die Vorrichtung zum gesicherten Starten (30), eines Schritts des Sicherns einer Verwendung der Daten und ausführbaren Codes (24), wobei dieser Schritt des Sicherns eine Überprüfung und eine Validierung von Zugangsrechten durch die Durchführung eines Verfahrens zur Authentifizierung eines Benutzers des externen Datenträgers (20) aufweist, unabhängig von jeder Ressource der IT-Anlage (10),
- Unterbrechen (106) des Startens der IT-Anlage (10) durch Aussenden (104), durch die Vorrichtung zum gesicherten Starten (30), einer Anweisung zum Stoppen, die an die IT-Anlage (10) gerichtet ist, solange der Schritt (108, 110) des Sicherns nicht durchgeführt wurde, und
- nach dem Durchführen des Schritts des Sicherns durch die Vorrichtung zum gesicherten Starten (30), darin eingeschlossen die Überprüfung und die Validierung der Zugangsrechte durch Authentifizierung, Übertragung, durch die Vorrichtung zum gesicherten Starten (30), der Daten (22) und ausführbaren Codes (24) des Programms zum Starten vom externen Datenträger (20) zur IT-Anlage (10) zum Starten der IT-Anlage (112) mit Hilfe der übertragenen Daten und ausführbaren Codes.

12. Verfahren zum gesicherten Starten einer IT-Anlage (10) nach Anspruch 11, wobei der Schritt (108, 110) des Sicherns einen kryptographischen Schritt des Sicherns der Daten (22) und ausführbaren Codes (24) des Programms zum Starten umfasst.

13. Verfahren zum gesicherten Starten einer IT-Anlage (10) nach Anspruch 12, wobei der kryptographische Schritt des Sicherns die Durchführung eines Verfahrens zur Überprüfung und Validierung der Integrität der Daten (22) und ausführbaren Codes (24) des Programms zum Starten umfasst.

14. Verfahren zum gesicherten Starten einer IT-Anlage (10) nach Anspruch 12 oder 13, wobei der kryptographische Schritt des Sicherns die Durchführung eines Verfahrens zum Dechiffrieren der Daten (22) und ausführbaren Codes (24) des Programms zum Starten umfasst.

## Claims

1. Secure start-up device (30) of a computer installation (10) comprising:
- a first connection interface (34) to the computer installation (10),
- a second connection interface (36) to an external data medium (20), this medium being separate from the computer installation (10) and including data (22) and executable codes (24),
- means (32, 42, 44) for securing use of the data (22) and executable codes (24), wherein these means include means for verifying and validating access rights, for executing a method of authentication of a user of the external data medium (20) independently of any resource of the computer installation (10),
**characterized in that** the data (22) and executable codes (24) are those of a start-up program of the computer installation (10) and **in that** the device (30) further comprises:
- means (32) for suspending the start-up of the computer installation (10) by sending a hold instruction to the computer installation (10) as long as the use of data (22) and executable codes (24) has not been secured, said securing being realized by an execution, by the means (32, 42, 44) for securing, of the authentication method, and
- means (32, 40) for transmitting the data (22) and executable codes (24) of the start-up program, from the external data medium (20) via the second connection interface (36) to the computer installation (10) via the first connection interface (34), after verification and validation of the access rights, to start up the computer installation (10) using the transmitted data (22) and executable codes (24).

2. Secure start-up device (30) of a computer installation (10) according to claim 1, comprising means (44) for securely storing access rights data for verifying and validating the access rights using the stored access rights data.

3. Secure start-up device (30) of a computer installation (10) according to claim 1 or 2, wherein the means for securing (32, 42, 44) includes cryptographic means for securing the data (22) and executable codes (24) of the start-up program.

4. Secure start-up device (30) of a computer installation (10) according to claim 3, wherein the cryptographic means for securing includes means (32) for executing a method for verifying the integrity of the data (22) and executable codes (24) of the start-up program.

5. Secure start-up device (30) of a computer installation (10) according to claim 3 or 4, wherein the cryptographic means for securing includes means (32) for executing a method for decrypting the data (22) and executable codes (24) of the start-up program.

6. Computer system (50) with a secure start-up including a secure start-up device (30) according to any one of claims 1 to 5 and a computer installation (10) connected to the secure start-up device via the first connection interface (34).

7. Computer system (50) with a secure start-up according to claim 6, wherein the first connection interface (34) is an access point to a digital data transmission bus (18) of the computer installation (10).

8. Computer system (60) for a secure start-up of a computer installation (10), comprising a secure start-up device (30) according any one of claims 1 to 5 and an external data medium (20), separate from the computer installation (10) and containing the data (22) and executable codes (24) of a start-up program of the computer installation, connected to the secure start-up device via the second connection interface (36).

9. Computer system (60) for a secure start-up of a computer installation according to claim 8, wherein the second connection interface (36) is an access point to a digital data transmission bus of the external data medium (20).

10. Computer system with a secure start-up comprising a computer installation (10), an external data medium (20), separate from the computer installation and comprising data (22) and executable codes (24) of a start-up program of the computer installation, and a secure start-up device (30) according to any one of claims 1 to 5, the secure start-up device (30) being:
- connected to the computer installation (10) via the first connection interface (34) and to the external data medium (20) via the second connection interface (36), and
- positioned in cut-off between the computer installation (10) and the external data medium (20).

11. Secure start-up method of a computer installation (10) including the following steps:
- connecting (102) a secure start-up device (30) to the computer installation (10),
- connecting an external data medium (20) to the secure start-up device (30), this external data medium being separate from the computer installation and comprising data (22) and executable codes (24) of a start-up program of the computer installation.
- executing (108, 110), by the secure start-up device (30), a step for securing use of said data and said executable codes (24), wherein this step for securing includes verifying and validating access rights by executing a method of authentication of a user of the external data medium (20) independently of any resource of the computer installation (10),
- suspending (106) the start-up of the computer installation (10) by sending (104), by the secure start-up device (30), a hold command to the computer installation (10) as long as the step (108, 110) for securing has not been executed, and
- after the secure start-up device (30) has executed the step for securing including the verification and validation of the access rights by authentication, the secure start-up device (30) transmits the start-up program's data (22) and executable codes (24) from the external data medium (20) to the computer installation (10), to start up (112) the computer installation using the transmitted data and executable codes.

12. Secure start-up method of a computer installation (10) according to claim 11, wherein the step (108, 110) for securing comprises a cryptographic step for securing the data (22) and executable codes (24) of the start-up program.

13. Secure start-up method of a computer installation (10) according to claim 12, wherein the cryptographic step for securing comprises the execution of a method for verifying the integrity of the data (22) and executable codes (24) of the start-up program.

14. Secure start-up method of a computer installation (10) according to claim 12 or 13, wherein the cryptographic step for securing comprises the execution of a method for decrypting the data (22) and executable codes (24) of the start-up program.
